# EUROPEAN PATENT APPLICATION

(11) **EP 4 480 969 A1**
(43) Date of publication of application: **25.12.2024**
(21) Application number: 23752768.4
(22) Date of filing: 02.02.2023
(51) Int. Cl.: C08F 2/44, B32B 27/16, B32B 27/18, C08F 292/00, G02B 1/14, G02C 7/00, G02C 7/02

(54) **PHOTOCURABLE COMPOSITION, OPTICAL LAMINATE, OPTICAL ARTICLE, LENS, AND SPECTACLES**

(30) Priority: 14.02.2022 JP 2022020137
(71) Applicant: TOKUYAMA CORPORATION, Yamaguchi 745-8648 (JP)
(72) Inventor: SUZUKI Eiji, Shunan-shi, Yamaguchi 745-8648 (JP); MORI Katsuhiro, Shunan-shi, Yamaguchi 745-8648 (JP)
(74) Representative: Papula Oy
(86) International application number: PCT/JP2023/003359
(87) International publication number: WO 2023/153303

(57) **Abstract**

The present invention provides: a photocurable composition that makes it possible to provide a cured body having excellent weather-resistant adhesiveness; and an optical laminate, an optical article, a lens, and spectacles which include said cured body. One embodiment provides a photocurable composition. The photocurable composition comprises an inorganic oxide, a radical-polymerizable monomer, an ultraviolet absorber including a radically polymerizable group, and a polymerization initiator. The optical laminate comprises an optical base material and a hard coat layer. The hard coat layer is opposite from at least one main surface of the optical base material. The hard coat layer is a cured body of a photocurable composition according to an embodiment of the present invention.

## Description

### TECHNICAL FIELD

The present invention relates to a photocurable composition, an optical laminate, an optical article, a lens, and eyeglasses.

### BACKGROUND ART

An optical article such as a lens of plastic eyeglasses may be coated on a surface thereof, with a hard coat layer with high hardness for the purpose of preventing scratches. The hard coat layer includes a thermosetting hard coat layer, which is obtained by thermally curing a thermosetting composition, and a photocurable hard coat layer, which is obtained by curing a photocurable composition. The thermosetting composition for forming a hard coat layer includes, for example, an inorganic oxide such as titania or zirconia, an organic silane, and an additive such as an antioxidant. The photocurable composition for forming a hard coat layer includes, for example, an inorganic oxide, an acrylate monomer, and an additive such as a photopolymerization initiator.

### Citation List

### Patent Document

Patent Document 1: PCT International Publication No. WO2020/116616
Patent Document 2: PCT International Publication No. WO2014/157590
Patent Document 3: Japanese Unexamined Patent Application, Publication No. 2019-006984
Patent Document 4: Japanese Unexamined Patent Application, Publication No. 2017-214465

### DISCLOSURE OF THE INVENTION

### Problems to be Solved by the Invention

An object of the present invention is to provide a photocurable composition capable of providing a cured product having excellent weather-resistant adhesion and an optical laminate, an optical article, a lens, and eyeglasses including the cured product.

### Means for Solving the Problems

According to one embodiment, a photocurable composition is provided. The photocurable composition includes an inorganic oxide, a radical-polymerizable monomer, an ultraviolet absorber including a radical-polymerizable group, and a photopolymerization initiator.

According to another embodiment, an optical laminate is provided. The optical laminate includes an optical substrate and a hard coat layer. The hard coat layer faces at least one main surface of the optical substrate. The hard coat layer is a cured product of the photocurable composition according to the embodiment.

According to another embodiment, an optical article is provided. The optical article includes an optical laminate according to the embodiment.

According to another embodiment, a lens is provided. The lens includes the optical laminate according to the embodiment. The optical substrate included in the optical laminate is a plastic lens substrate.

According to another embodiment, eyeglasses are provided. The eyeglasses include the lens according to the embodiment.

### Effects of the Invention

According to the present invention, there are provided a photocurable composition capable of providing a cured product excellent in weather-resistant adhesion, and an optical laminate, an optical article, a lens, and eyeglasses each including the cured product.

### BRIEF DESCRIPTION OF THE DRAWINGS

FIG. 1 is a cross-sectional view schematically showing an example of an optical laminate according to an embodiment; and
FIG. 2 is a perspective view schematically showing an example of eyeglasses according to an embodiment.

### PREFERRED MODE FOR CARRYING OUT THE INVENTION

According to one embodiment, a photocurable composition is provided. The photocurable composition includes an inorganic oxide, a radical-polymerizable monomer, an ultraviolet absorber including a radical-polymerizable group, and a photopolymerization initiator.

A cured product of a photocurable composition using a radical-polymerizable monomer such as an acrylate may deteriorate due to irradiation with ultraviolet light, resulting in deteriorated adhesion in some cases. The photocurable composition according to the embodiment includes an ultraviolet absorber including a radical-polymerizable group, suppressing this deterioration. That is, the radical-polymerizable group included in this ultraviolet absorber is polymerized with the radical-polymerizable monomer when the photocurable composition is cured. The ultraviolet absorber including a radical-polymerizable group can firmly adhere to a matrix formed by the radical-polymerizable monomer, compared with the ultraviolet absorber not having a radical-polymerizable group. Therefore, when this photocurable composition is used, bleeding out or the like of the ultraviolet absorber is suppressed as compared with the case of using a photocurable composition including an ultraviolet absorber not having a radical-polymerizable group, and a cured product is obtained having excellent weather-resistant adhesion over a long period of time.

The photocurable composition according to the embodiment is suitable as, for example, a composition for forming a hard coat layer for protecting a surface of an optical substrate. The hard coat layer can be provided on a surface of the optical substrate by, for example, applying a photocurable composition onto the optical substrate and curing the composition. Since polymerization of the photocurable composition is initiated by irradiation of light, the photocurable composition has a shorter curing time and is easily controlled as compared with a thermosetting composition which is cured by heating. Furthermore, in the thermosetting composition, since the composition is cured at a relatively high temperature of 90°C or higher, cracks may occur in the obtained cured product. The cured product of the photocurable composition is excellent in aesthetic appearance and durability because cracks due to such heat do not occur.

Hereinafter, the photocurable composition according to the embodiment will be described in detail.

### [Photocurable Composition]

### (1) Inorganic Oxide

Examples of the inorganic oxide include at least one selected from the group consisting of zirconia, titania, ceria, silica, copper oxide, neodymium oxide, yttrium oxide, and tungsten oxide. The inorganic oxide preferably includes at least one selected from the group consisting of zirconia, titania, ceria, and silica. From the viewpoint of obtaining a cured product having a high refractive index, the inorganic oxide preferably includes zirconia, and more preferably consists of zirconia alone.

A zirconia crystal system may be any of a monoclinic system, a tetragonal system, or a cubic system. The zirconia crystal system is preferably the tetragonal system. A plurality of types of zirconia each having a different crystal system may be used.

The inorganic oxide preferably includes a radical-polymerizable group. An inorganic oxide having a radical-polymerizable group tends to have excellent dispersibility in a photocurable composition. Examples of the radical-polymerizable group include at least one selected from the group consisting of an acryloyl group, a methacryloyl group, a vinyl group, an allyl group, and a styryl group. The radical-polymerizable group is preferably of the same type as the radical-polymerizable group of a radical-polymerizable monomer described below. That is, the inorganic oxide is preferably surface-modified so as to include a radical-polymerizable group. Surface modification of the inorganic oxide is performed, for example, by mixing an inorganic oxide and a silane coupling agent. The fact that the inorganic oxide has a radical-polymerizable group can be confirmed by, for example, Fourier transform infrared spectroscopy.

Refractive index of the inorganic oxide is preferably 1.6 or more. By using a photocurable composition including an inorganic oxide having a high refractive index, refractive index of the cured product can be increased. The refractive index of the inorganic oxide can be measured by, for example, an Abbe refractometer.

The inorganic oxide is preferably in the form of particles, and more preferably in the form of colloidal particles. An average particle diameter of the inorganic oxide measured by a dynamic light scattering method is, for example, 1 nm or more and 1 µm or less, and preferably 5 nm or more and 100 nm or less.

A proportion of the inorganic oxide in the solid component of the photocurable composition is, for example, 30% by mass or more and 70% by mass or less and preferably 40% by mass or more and 60% by mass or less. When the proportion of the inorganic oxide is high, hardness and refractive index of the hard coat film tend to increase. When the proportion of the inorganic oxide is low, flexibility of the hard coat film tends to increase. The proportion of the inorganic oxide in the photocurable composition can be calculated by, for example, decomposing components other than the inorganic oxide from the photocurable composition by thermogravimetry or the like and measuring a weight of the remaining inorganic oxide.

### (2) Radical-Polymerizable Monomer

As the radical-polymerizable monomer, a monomer having at least one radical polymerization group selected from the group consisting of an acryloyl group, a methacryloyl group, a vinyl group, an allyl group, and a styryl group may be used. As the radical-polymerizable monomer, a monomer having at least one of an acryloyl group or a methacryloyl group, that is, a (meth)acryloyl group, is preferably used.

The number of radical-polymerizable groups in one radical-polymerizable monomer is preferably 1 or more and 4 or less. When the number of radical-polymerizable groups is large, the hardness of the cured product tends to increase. When the number of radical-polymerizable groups is small, the flexibility of the cured product tends to increase, and adhesion to the optical substrate tends to increase.

A proportion of the radical-polymerizable monomer in the solid component of the photocurable composition is, for example, 10% by mass or more and 60% by mass or less, and preferably 20% by mass or more and 50% by mass or less. The proportion of the radical-polymerizable monomer in the photocurable composition can be calculated by, for example, isolating the radical-polymerizable monomer from the photocurable composition by column chromatography or the like and measuring the weight of the radical-polymerizable monomer.

### (2-1) Trifunctional (Meth)Acrylate Monomer

The radical-polymerizable monomer preferably includes a monomer having three (meth)acryloyl groups in one molecule, that is, a trifunctional (meth)acrylate monomer. When a trifunctional (meth)acrylate monomer is included, both the hardness of the cured product and the adhesion to an optical substrate or the like thereof tend to increase.

In the radical-polymerizable monomer, a proportion of the trifunctional (meth)acrylate monomer is, for example, 10% by mass or more, preferably 20% by mass or more, and more preferably 50% by mass or more. When the proportion of the trifunctional (meth)acrylate monomer is high, weather-resistant adhesion tends to increase. The upper limit of the proportion of the trifunctional (meth)acrylate monomer is, for example, 100% by mass, and according to another example, 80% by mass or less.

The proportion of the trifunctional acrylic monomer in the solid component of the photocurable composition is, for example, 5 mass% or more and 30 mass% or less, and preferably 10 mass% or more and 25 mass% or less.

Examples of the trifunctional (meth)acrylate monomers include pentaerythritol tri(meth)acrylate, trimethylolpropane tri(meth)acrylate, glycerl propoxy tri(meth)acrylate, and the like.

### (2-2) 4-Functional Acrylate Monomer

The radical-polymerizable monomer may include a monomer having four (meth)acryloyl groups in one molecule, that is, a four-functional (meth)acrylate monomer. When a tetrafunctional (meth)acrylate monomer is included, the hardness of the cured product tends to increase.

In the radical-polymerizable monomer, a proportion of the tetrafunctional (meth)acrylate monomer is, for example, 10% by mass or more, preferably 20% by mass or more, and more preferably 30% by mass or more from the viewpoint of increasing the hardness of the cured product. In the radical-polymerizable monomer, the proportion of the tetrafunctional (meth)acrylate monomer is, for example, 90% by mass or less, preferably 80% by mass or less, and more preferably 60% by mass or less from the viewpoint of enhancing weather-resistant adhesion.

Examples of the tetrafunctional (meth)acrylate monomers include pentaerythritol tetra(meth)acrylate, pentaerythritol alkoxytetra(meth)acrylate, ditrimethylolpropane tetra(meth)acrylate, and the like.

### (2-3) Bifunctional Acrylate Monomer

The radical-polymerizable monomer may include a monomer having two (meth)acryloyl groups in one molecule, that is, a bifunctional (meth)acrylate monomer. When the bifunctional (meth)acrylate monomer is included, the flexibility of the cured product tends to increase.

In the radical-polymerizable monomer, a proportion of the bifunctional (meth)acrylate monomer is, for example, 10% by mass or more and 50% by mass or less, and preferably 20% by mass or more and 40% by mass or less.

Examples of bifunctional (meth)acrylate monomers include bifunctional methoxylated bisphenol A (meth)acrylate, bifunctional ethoxylated bisphenol A (meth)acrylate, bifunctional polyethylene glycol (meth)acrylate, bifunctional polypropylene glycol acrylate, bifunctional tricyclodecanol acrylate, and the like.

### (2-4) Monofunctional Acrylate Monomer

The radical-polymerizable monomer may include a monomer having one (meth)acryloyl group in one molecule, that is, a monofunctional (meth)acrylate monomer. In the radical-polymerizable monomer, a proportion of the monofunctional (meth)acrylate monomer is, for example, 5 mass% or more and 30 mass% or less, and preferably 10 mass% or more and 20 mass% or less.

Examples of monofunctional (meth)acrylate monomers include glycidyl (meth)acrylate, glycidyl ethyl (meth)acrylate, glycidyl propyl (meth)acrylate, glycidyl butyl (meth)acrylate, compounds having an isocyanate group, and polyethylene glycol (meth)acrylate. Examples of compounds having an isocyanate group include 2-isocyanatoethyl (meth)acrylate (MOI). When a compound having an isocyanate group is included, adhesion between the cured product and various optical substrates tends to be enhanced.

### (2-5) Other Radical-Polymerizable Monomers

Examples of radical-polymerizable monomers other than the (meth)acrylate monomer include urethane (meth)acrylate and epoxy (meth)acrylate.

Urethane (meth)acrylate is a monomer having a urethane bond and an acryloyl group. When urethane (meth)acrylate is included, adhesion between the optical base material including a urethane bond and the cured product tends to be enhanced.

### (3) Ultraviolet Absorber Having Radical-Polymerizable Group

The ultraviolet absorber is a compound having an absorption wavelength in an ultraviolet (UV) region of 400 nm or less. The ultraviolet absorber includes a radical-polymerizable group. The radical-polymerizable group may be the same type of group as the group possessed by the radical-polymerizable monomer described above, or may be a different type of group. The radical-polymerizable group of the ultraviolet absorber may be bonded to the radical-polymerizable group of the radical-polymerizable monomer when the photocurable composition is cured. Therefore, by using such an ultraviolet absorber, bleeding out of the ultraviolet absorber from the cured product can be suppressed. In addition, the hardness and crosslinking density of the cured product can be further increased. Further, dispersibility of the ultraviolet absorber in the photocurable composition is enhanced, improving the handling property. The fact that the ultraviolet absorber includes a radical-polymerizable group can be confirmed by, for example, Fourier transform infrared spectroscopy.

A proportion of the ultraviolet absorber having a radical-polymerizable group in the solid component of the photocurable composition is, for example, 0.1% by mass or more and 15% by mass or less, preferably 0.5% by mass or more and 10% by mass or less, and more preferably 1% by mass or more and 5% by mass or less. When the proportion of the ultraviolet absorber is high, weather-resistant adhesion of the cured product tends to be enhanced. When the proportion of the ultraviolet absorber is low, the hardness of the cured product tends to increase. The proportion of the ultraviolet absorber in the photocurable composition can be confirmed from absorbance of the cured product by, for example, an ultraviolet-visible spectrophotometer.

Ratio M1/M2 of mass M1 of the radical-polymerizable monomer to mass M2 of the ultraviolet absorber having a radical-polymerizable group is preferably 10 or more and 50 or less. By adjusting the ratio M1/M2 to this range, the weather-resistant adhesion and hardness of the cured product tends to be increased. The ratio M1/M2 is more preferably 15 or more and 30 or less.

As the ultraviolet absorber including a radical-polymerizable group, an organic compound may be used. As the ultraviolet absorber including a radical-polymerizable group, for example, at least one selected from the group consisting of a benzophenone derivative, ethylhexyl methoxycinnamate, a benzotriazole derivative, and a triazine derivative is used. The ultraviolet absorber preferably includes at least one selected from the group consisting of a benzophenone derivative, ethylhexyl methoxycinnamate, and a benzotriazole derivative, and more preferably includes a benzotriazole derivative.

The benzotriazole derivative preferably includes a compound represented by the following formula (1).

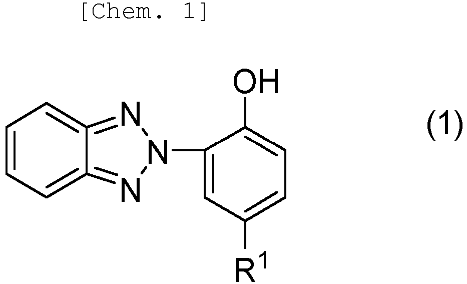

In the formula (1), R¹ is a group including a radical-polymerizable group. R¹ is, for example, a (meth)acryloyl group, an oxy(meth)acryloyl group, or an alkyleneoxy(meth)acryloyl group. The alkylene group of the alkyleneoxy(meth)acryloyl group preferably has 1 or more and 6 or less carbon atoms, and more preferably 2 or more and 3 or less carbon atoms.

The ultraviolet absorber preferably has an absorption peak in the absorption spectrum in the range of 300 nm or more and 380 nm or less, and more preferably in the range of 320 nm or more 360 nm or less. When such an ultraviolet absorber is used, the weather-resistant adhesion of the cured product tends to be further enhanced. The absorption spectrum can be measured by a spectrophotometer.

Examples of the ultraviolet absorber including a radical-polymerizable group include RUVA-93 (2-[2-hydroxy-5-[2-(methacryloyloxy)ethyl]phenyl]-2H-benzotriazole) manufactured by Otsuka Chemical Co., Ltd. The ultraviolet absorber may be used as only one type, or a mixture of a plurality of types may be used. In addition, an ultraviolet absorber including a radical-polymerizable group and an ultraviolet absorber not including a radical-polymerizable group may be used in combination.

As the ultraviolet absorber not including a radical-polymerizable group, for example, at least one selected from the group consisting of a benzophenone derivative, ethylhexyl methoxycinnamate, a benzotriazole derivative, and a triazine derivative is used. As the benzophenone derivative, Adeca stab 1413 of ADEKA Corporation, which is octabenzone; SEESORB 107 or SEESORB L58 manufactured by Shipro Kasei Kaisha, Ltd.; or the like can be used. As ethylhexyl methoxycinnamate, Uvinul (registered trademark) MC-80 manufactured by BASF or the like can be used. As the benzotriazole derivative, Adeca stab LA-32 and LA-36 of ADEKA Corporation; Tinuvin 1130 from BASF; or the like can be used. As the triazine derivative, Adeka stab LA-46 of ADEKA Corporation or the like can be used.

### (4) Photopolymerization Initiator

A proportion of the photopolymerization initiator in the solid component of the photocurable composition is, for example, 0.1% by mass or more and 5% by mass or less, and preferably 0.5% by mass or more and 2% by mass or less. The proportion of the photopolymerization initiator in the photocurable composition can be calculated by, for example, isolating the photopolymerization initiator from the photocurable composition by column chromatography or the like and measuring a weight of the photopolymerization initiator.

Examples of the photopolymerization initiator include Irgacure (registered trademark) TPO and Irgacure (registered trademark) 184 manufactured by BASF, phenylbis(2,4,6-trimethylbenzoyl)phosphine oxide, 2,3,5,6-tetramethylbenzoyl-diphenylphosphine oxide, and 3,4-dimethylbenzoyldiphenylphosphine oxide. The photopolymerization initiator may be used as only one type, or a mixture of a plurality of types may be used.

### (5) Other Additives

The photocurable composition may include other additives in addition to the above components. Examples of the other additives include a release agent, an infrared absorber, an antioxidant, an anticoloring agent, an antistatic agent, a fluorescent dye, a dye, a pigment, a fragrance, and a stabilizer.

### (5-1) Solvents

A solvent is used to adjust viscosity of the photocurable composition and thickness of the coating film. As an example of the solvent, a known organic solvent can be used. Examples of such organic solvents include an alcohol, a lower alcohol ester of a lower carboxylic acid, an ether, a ketone, a halogenated hydrocarbon, an aromatic hydrocarbon, and the like. The alcohol includes methanol, ethanol, propanol, isopropanol, butanol, diacetone alcohol, and the like. The lower alcohol ester of a lower carboxylic acid includes methyl acetate, ethyl acetate, propyl acetate, and the like. The ether includes cellosolve, dioxane, ethylene glycol monoisopropyl ether, and the like. The ketone includes acetone, methyl ethyl ketone, methyl isobutyl ketone, acetylacetone, and the like. The halogenated hydrocarbon includes methylene chloride and the like. The aromatic hydrocarbon includes benzene, toluene, xylene, and the like. The solvent may be used as only one type, or a mixture of a plurality of types may be used.

A proportion of the solvent in the photocurable composition is, for example, 30% by mass or more and 75% by mass or less, and preferably 40% by mass or more and 70% by mass or less. The proportion of the solvent in the photocurable composition can be confirmed, for example, by thermogravimetric analysis.

### (5-2) Leveling Agent

The leveling agent is used for smoothing the coating film of the photocurable composition. As the leveling agent, a silicone surfactant, a fluorine-including surfactant, or the like may be used. Specifically, L-7001, L-7002, L-7604, FZ-2123 manufactured by Dow Toray, Megaface F-470, Megaface F-1405, Megaface F-479 manufactured by DIC Corporation, Flowrad FC-430 manufactured by 3M Japan, and the like can be used. The leveling agent may be used as only one type, or a mixture of a plurality of types may be used.

A proportion of the leveling agent in the solid component of the photocurable composition is, for example, 0.01% by mass or more and 5% by mass or less, and preferably 0.1% by mass or more and 0.5% by mass or less. The proportion of the leveling agent in the photocurable composition can be calculated by, for example, isolating the leveling agent from the photocurable composition by column chromatography or the like and measuring a weight of the leveling agent.

### (6) Method for producing Photocurable Composition

The photocurable composition can be produced, for example, by the following method. First, each raw material is prepared. As the zirconia raw material, a dispersion of zirconia particles is preferably used. The dispersion of zirconia particles may include zirconia particles, a solvent, a dispersant, and the like. As the solvent, the same type of solvent as the above-described other additives may be used. A ratio of the solid content in the dispersion of the zirconia particles is preferably 50% by mass or more and 80% by mass or less.

As a raw material of the inorganic oxide, an inorganic oxide dispersion may be used. As the inorganic oxide dispersion, zirconia nanoparticle dispersion Zircostar (registered trademark) manufactured by Nippon Shokubai Co., Ltd. is preferably used. Next, the prepared raw materials are mixed, for example, under normal pressure and normal temperature to obtain a photocurable composition.

By using the photocurable composition obtained by the above-described method, a cured product excellent in weather-resistant adhesion can be obtained. This photocurable composition is suitable as a photocurable composition for forming a hard coat layer for protecting surfaces of a plastic lens for eyeglasses, for example.

### [Optical Laminate]

The optical laminate according to an embodiment includes an optical substrate and a hard coat layer facing at least one main surface of the optical substrate. The hard coat layer is a cured product of the photocurable composition according to the above-described embodiment. The hard coat layer may be provided on one main surface or both main surfaces of the optical substrate.

The optical laminate may further include a functional resin layer. The functional resin layer is provided on at least one main surface of the optical substrate. The functional resin layer may be provided between the optical substrate and the hard coat layer, or may be provided on a main surface of the optical substrate opposite to the main surface on which the hard coat layer is provided. The hard coat layer may be provided on two places on the surface of the functional resin layer and on the main surface opposite to the main surface on which the functional resin layer of the optical substrate is provided.

The optical laminate may further include an antireflection film. The antireflection film may be provided on the surface of the hard coat layer. That is, the antireflection film may be located on the outermost surface of the optical laminate. The hard coat layer or functional resin layer may be present between the optical substrate and the antireflection film. The lens according to the embodiment may include, for example, a laminate of an optical substrate, a functional resin layer provided on the surface of the optical substrate, a hard coat layer provided on the functional resin layer, and an antireflection film provided on the hard coat layer.

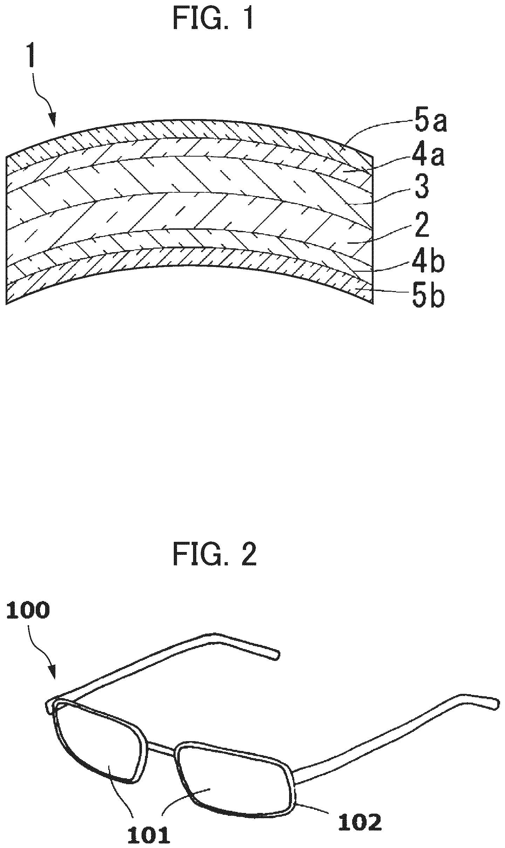

FIG. 1 is a cross-sectional view schematically showing an example of an optical laminate according to an embodiment. An optical laminate 1 shown in FIG. 1 includes an optical substrate 2, a functional resin layer 3 provided on one main surface of the optical substrate 2, a hard coat layer 4a provided on the functional resin layer 3, a hard coat layer 4b provided on a main surface of the optical substrate 2 opposite to the main surface on which the functional resin layer 3 is provided, an antireflection film 5a provided on the hard coat layer 4a, and an antireflection film 5b provided on the hard coat layer 4b. The optical substrate 2 is a convex meniscus lens having an uneven shape.

### (1) Optical Substrate

As the optical substrate, any substrate having optical transparency can be used without particular limitation. Examples of the optical substrate include a glass lens, a plastic lens, and glass and a resin used in a window of a house or a vehicle.

As the plastic lens, a known lens such as a thermoplastic resin lens or a cross-linkable resin lens can be used. Examples of the thermoplastic resin include a (meth)acrylic resin and a polycarbonate resin. Examples of the cross-linkable resin include a polyfunctional (meth)acrylic resin, an allyl-based resin, a thiourethane-based resin, a urethane-based resin, and a thioepoxy-based resin. As the plastic lens, a methacrylic plastic lens or a thiourethane-based plastic lens is suitable.

A shape of the plastic lens substrate is not particularly limited, and a known shape can be applied. Examples of the shape of the plastic lens substrate include a convex meniscus lens, a concave meniscus lens, a minus lens, a plus lens, and an oblique-shaped lens.

Refractive index of the optical substrate is preferably 1.50 or more, and more preferably 1.59 or more. When the refractive index of the optical substrate is high, thickness thereof tends to be thinner. The upper limit of the refractive index of the optical substrate is not particularly limited, but is 1.76 or less according to one example. The refractive index of the optical substrate can be measured by, for example, a V-block method.

The optical substrate may include a functional dye. The functional dye is a dye that absorbs light of a specific wavelength. The functional dye includes a photochromic compound, a thermochromic material, a porphyrin compound, a near infrared absorber, an ultraviolet absorber, a blue light absorber, a polarizer, and a dye. The functional dye may include only one type or may include a mixture of a plurality of types.

The photochromic compound is a compound that reversibly changes its structure by ultraviolet irradiation. The optical substrate including the photochromic compound can be changed from a colorless transparent state to a colored state by ultraviolet irradiation. As the photochromic compound, for example, at least one selected from the group consisting of a chromene compound, a fulgide compound, and a spirooxazine compound is used. As the photochromic compound, the chromene compound is preferably used.

### (2) Hard Coat Layer

The hard coat layer is a cured product of the photocurable composition according to the embodiment. The hard coat layer may be provided on one main surface or both main surfaces of the optical substrate. The hard coat layer covers at least one main surface of the optical substrate and prevents the surface from being scratched. Since the hard coat layer includes an ultraviolet absorber including a radical-polymerizable group, deterioration of the optical substrate can be suppressed. Therefore, the adhesion between the optical substrate and the hard coat layer is maintained for a long period of time.

Refractive index of the hard coat layer is preferably 1.50 or more, and more preferably 1.59 or more. The upper limit of the refractive index of the hard coat layer is not particularly limited, but is 1.68 or less according to one example. The refractive index of the hard coat layer is preferably the same value as a refractive index of the optical substrate. The refractive index of the hard coat layer can be measured by, for example, a prism coupler method.

Thickness of the hard coat layer is, for example, 0.1 um or more and 100 µm or less, preferably 0.2 um or more and 10 µm or less, and more preferably 0.5 um or more and 5 µm or less.

### (3) Functional Resin Layer

The functional resin layer includes a functional dye and a resin. As the functional dye, the same dyes as those described for the optical substrate can be used. In the optical laminate, the optical substrate may also include a functional dye in addition to the functional resin layer, or may not include it. In this case, the functional dye included in the functional resin layer and the functional dye included in the optical substrate may be the same type or different types.

Examples of the resin included in the functional resin layer include a urethane resin, a urea resin, a urethane urea resin, a thiourethane resin, a thiourea resin, a thiourethane urea resin, an acrylic resin, a methacrylic resin, a thioepoxy resin, and an allyl resin.

### (4) Antireflection Film

The antireflection film is a film that prevents reflection of light by an interference action. The antireflection film has a multilayer structure in which a relatively high refractive index film and a relatively low refractive index film are laminated. The low refractive index film is made of, for example, silicon dioxide (SiO₂) having a refractive index of about 1.43 to 1.47. The high refractive index film is made of a material having a refractive index higher than that of the low refractive index layer. As such a material, for example, zirconium oxide (ZrO₂), tin oxide (SnO₂), niobium oxide (Nb₂O₅), tantalum oxide (Ta₂O₅), titanium oxide (TiO₂), yttrium oxide (Y₂O₃), aluminum oxide (Al₂O₃), a mixture thereof (for example, indium tin oxide (ITO)), or the like is used.

### (5) Method for producing Optical Laminate

The optical laminate can be produced, for example, by the following method. First, an optical substrate is prepared. In order to enhance adhesion to the hard coat layer, the surface of the optical substrate may be subjected to a chemical treatment using an alkali solution, an acid solution, or the like, or a physical treatment using corona discharge, plasma discharge, polishing, or the like.

Next, the photocurable composition according to the embodiment is applied onto the optical substrate by, for example, a spin coating method to obtain a coating film. The coating film is irradiated with ultraviolet light to cure the coating film, thereby obtaining a hard coat layer. The ultraviolet light irradiation is performed, for example, in a nitrogen atmosphere, the atmosphere temperature is, for example, 0°C or higher and 40°C or lower, and the ultraviolet light irradiation time is, for example, 5 seconds or longer and 2 minutes or shorter. The ultraviolet light intensity is 0.4 J/cm² and 10 J/cm² or less. The cured coating film may be annealed. In annealing treatment, the heating temperature is set to, for example, 80°C or higher and 150°C or lower, and the heating time is set to, for example, 10 minutes or longer and 10 hours or shorter.

When the functional resin layer is provided, the composition for forming a functional resin layer is applied onto the optical substrate by, for example, a spin coating method to obtain a coating film. The composition for forming a functional dye layer includes at least one compound selected from the group consisting of a resin, a monomer for forming the resin, and a reactive compound for forming the resin, a functional dye, and optionally an additive. The coating film is cured by thermal polymerization or photopolymerization to form a functional resin layer. The hard coat layer may be formed on the main surface opposite to the surface on which the functional resin layer is provided by the same method as described above.

The optical laminate according to the embodiment can be manufactured by ultraviolet light irradiation as described above, and thus can be efficiently manufactured in a shorter time as compared with a laminate manufactured by heating. In addition, the optical laminate according to the embodiment includes a hard coat layer which is a cured product of the photocurable composition according to the embodiment, and thus can achieve high refractive index and excellent weather-resistant adhesion.

### [Optical Article]

The optical article includes an optical laminate. Examples of the optical article include a lens for plastic eyeglasses, eyeglasses including the lens, an automobile window, and a house window.

FIG. 2 is a perspective view schematically showing an example of eyeglasses according to the embodiment. Eyeglasses 100 shown in FIG. 2 include two lenses 101 and a frame 102 for fixing the lenses 101. At least one of the two lenses 101 is a lens according to the embodiment.

### EXAMPLES

Hereinafter, the present invention will be described based on Examples.

### <Example 1>

### (Preparation of photocurable composition)

A photocurable composition was prepared by mixing 6.7 g of pentaerythritol tetraacrylate (A-TMMT), 6.7 g of a mixture of pentaerythritol tetraacrylate and pentaerythritol triacrylate (A-TMM-3LM-N), 5 g of 2-isocyanatoethyl acrylate (MOI), 27.9 g of a zirconia dispersion (ZP-153), 58.7 g of methyl ethyl ketone (MEK), 0.1 g of a leveling agent (L7002), 0.1 g of an ultraviolet absorber (RUVA-93) including a polymerizable group, 0.4 g of a photopolymerization initiator (I-184), and 0.1 g of a photopolymerization initiator (I-TPO). Hereinafter, this is also referred to as a photocurable composition HC1.

### (Production of Optical Laminate)

First, a plastic lens (MR8) made of a thiourethane-based resin having a refractive index of 1.60 was prepared as the optical substrate. The surface of the optical substrate was polished and then chemically treated with a 20% by mass sodium hydroxide solution.

The photocurable composition HC1 was applied to one main surface of the chemically treated optical substrate by a spin coating method to form a coating film. After the coating film was sufficiently dried, the dried coating film was photocured. In photocuring, light was radiated for 40 seconds using a metal halide lamp having an output of 200 mW/cm² in a nitrogen gas atmosphere. After the UV irradiation, the cured coating film was heated at a temperature of 120°C for 1 hour. In this manner, an optical laminate in which the hard coat layer was laminated on one main surface of the optical substrate was obtained. The thickness of the hard coat layer was 2 µm.

### <Examples 2 to 27>

Photocurable compositions HC2 to HC24 were obtained in the same manner as described in Example 1 except that the formulation of the photocurable composition was changed as shown in Table 1 below. In addition, as shown in Table 2 below, optical laminates were obtained in the same manner as described in Example 1 except that the photocurable compositions HC2 to HC24 were used and the production conditions were changed.

Details of abbreviations in Tables 1 and 2 are as follows. A-TMMT: pentaerythritol tetraacrylate. A-TMM-3LM-N: a mixture of pentaerythritol tetraacrylate and pentaerythritol triacrylate. In this mixture, a proportion of pentaerythritol triacrylate was approximately 57% by mass.

MOI: 2-isocyanatoethyl acrylate
U-4HA: urethane acrylate. A200: a bifunctional polyethylene glycol acrylate where the number of repetitions of the polyethylene chain is about 4.
A400: a bifunctional polyethylene glycol acrylate where the number of repetitions of the polyethylene chain is about 9.
4G: a bifunctional polyethylene glycol methacrylate where the number of repetitions of the polyethylene chain is about 4. GMA: glycidyl methacrylate.
ZP153: zirconia dispersion (manufactured by Nippon Shokubai Kagaku Kogyo Co., Ltd.) having a solid content concentration of 70% by mass. A particle size of zirconia as measured by dynamic light scattering was 11 nm. Further, the zirconia particles were confirmed by pyrolysis gas chromatography mass spectrometry to be modified with an acryloyl group.
MEK: methyl ethyl ketone.
UV1: ultraviolet absorber having a methacryloyl group. RUVA-93 manufactured by Otsuka Chemical Co., Ltd.
UV2: Tinuvin 1130 from BASF.
UV3: SEESORB L58 from Shipro Chemical Co., Ltd.
UV4: SEESORB 107 from Shipro Chemical Co., Ltd.
UV5: Adeka Stab 1413 from ADEKA Corporation.
L7002: leveling agent (L-7002, Dow Toray).
I-184: 1-hydroxy-cyclohexyl-phenyl-ketone (Omnirad^{®} 184, IGM Resins B.V.).
I-TPO: bis(2,4,6-trimethylbenzoyl)phenylphosphine oxide (Omnirad^{®} TPO H, IGM Resins B.V.).
MR8: thiourethane-based resin having a refractive index of 1.60.
CR39: aryldicarbonate resin having a refractive index of 1.50.

### <Evaluation of Characteristics>

### 1. Adhesion

The optical laminates according to Examples 1 to 27 were evaluated for adhesion. The evaluation was performed by a checkerboard test. In other words, the hard coat layer of the optical laminate was cut at intervals of about 1 mm using a cutter knife to provide 100 squares. A cellophane adhesive tape (CELLOTAPE (registered trademark) manufactured by Nichiban Co., Ltd.) was strongly adhered onto these squares, and the adhesive tape was peeled off by pulling the tape at once in a direction of 90° from the surface. After peeling off the adhesive tape, the number of squares of the hard coat layer remaining on the optical base material was counted, and this number is shown in Table 2.

### 2. Abrasion Resistance

Abrasion resistance of the optical laminates according to Examples 1 to 27 was evaluated. Specifically, steel wool (Bonster No. #0000 manufactured by Nippon Steel Wool Co., Ltd.) was brought into contact with the surface of the hard coat layer of the optical laminate in a state where a load of 1 kg was applied, and was reciprocated 10 times. The surface of the hard coat layer after the test was visually confirmed and evaluated in the following eight grades. In addition, the same test was performed by changing the weight of the load to 3 kg and 5 kg. The results are shown in Table 2.

A: few scratches (less than three scratches visually observed).
   A': a few scratches (three or more and less than four scratches visually observed).
B: scratched (4 or more and less than 6 scratches visually observed).
   B': slightly scratched (6 or more and less than 11 scratches visually observed).
C: scratched (11 or more and less than 16 scratches visually observed).
   C': somewhat many scratches (16 or more and less than 21 scratches visually observed).
D: many scratches (21 or more and less than 41 scratches visually observed).
E: a large number of scratches (41 or more scratches visually observed).

### 3. Boiling Adhesion

The optical laminates according to Examples 1 to 27 were evaluated for boiling adhesion. Specifically, the optical laminate was first immersed in boiling water for one hour. After the test, the optical laminate was taken out, the water droplets were wiped off, and the adhesion was evaluated by the same method as described above. The immersion time was changed to 5 hours, and the same test was performed. The results are shown in Table 2.

### 4. Weather-Resistant Adhesion

The weather-resistant adhesion of the optical laminates according to Examples 1 to 27 was evaluated. Specifically, first, the optical laminate was irradiated with ultraviolet light at a radiation rate of 40 W/m² for 24 hours using a xenon weather meter X25FL manufactured by Suga Test Instruments Co., Ltd. At this time, the black panel temperature was 63°C. After the test, the optical laminate was taken out, and the adhesion was evaluated by the same method as described above. This operation was performed after 48 hours, 72 hours, 96 hours, and 120 hours. The results are shown in Table 2.

### [Table 1]

**Table 1**

| | A-TMMT | A-TMM-3LM-N | MOI | Others | | ZP153 | MEK | UV | | L7002 | I-184 | I-TPO |
|---|---|---|---|---|---|---|---|---|---|---|---|---|
| | (wt%) | (wt%) | (wt%) | (wt%) | | (wt%) | (wt%) | (wt%) | | (wt%) | (wt%) | (wt%) |
| HC1 | 6.34 | 6.34 | 4.73 | - | - | 26.41 | 55.46 | UV1 | 0.09 | 0.11 | 0.40 | 0.13 |
| HC2 | 6.31 | 6.31 | 4.71 | - | - | 26.31 | 55.25 | UV1 | 0.47 | 0.11 | 0.39 | 0.13 |
| HC3 | 6.54 | 6.54 | 1.76 | - | - | 27.25 | 57.22 | UV1 | 0.04 | 0.11 | 0.41 | 0.14 |
| HC4 | 6.53 | 6.53 | 1.75 | - | - | 27.21 | 57.14 | UV1 | 0.18 | 0.11 | 0.41 | 0.14 |
| HC5 | - | 13.35 | 1.79 | - | - | 27.83 | 55.46 | UV1 | 0.90 | 0.11 | 0.42 | 0.14 |
| HC6 | 0.67 | 12.73 | 1.80 | - | - | 27.93 | 55.66 | UV1 | 0.54 | 0.11 | 0.42 | 0.14 |
| HC7 | 1.34 | 12.06 | 1.80 | - | - | 27.93 | 55.66 | UV1 | 0.54 | 0.11 | 0.42 | 0.14 |
| HC8 | 2.68 | 10.72 | 1.80 | - | - | 27.93 | 55.66 | UV1 | 0.54 | 0.11 | 0.42 | 0.14 |
| HC9 | 4.47 | 8 . 93 | 1.80 | - | - | 27.93 | 55.66 | UV1 | 0.54 | 0.11 | 0.42 | 0.14 |
| HC10 | 6.66 | 6 . 66 | 1.79 | - | - | 27.78 | 55.90 | UV1 | 0.54 | 0.11 | 0.42 | 0.14 |
| HC11 | 6.66 | 6.66 | - | - | - | 27.75 | 58.27 | - | - | 0.11 | 0.42 | 0.14 |
| HC12 | 6.66 | 6 . 66 | 1.79 | - | - | 27.78 | 55.90 | UV3 | 0.54 | 0.11 | 0.42 | 0.14 |
| HC13 | 6.66 | 6 . 66 | 1.79 | - | - | 27.78 | 55.90 | UV2 | 0.54 | 0.11 | 0.42 | 0.14 |
| HC14 | 6.66 | 6 . 66 | 1.79 | - | - | 27.78 | 55.90 | UV4 | 0.54 | 0.11 | 0.42 | 0.14 |
| HC15 | 6.66 | 6 . 66 | 1.79 | - | - | 27.78 | 55.90 | UV5 | 0.54 | 0.11 | 0.42 | 0.14 |
| HC16 | 5.75 | 5.75 | 4.29 | U-4HA | 4.29 | 23.94 | 50.28 | UV1 | 5.14 | 0.10 | 0.36 | 0.12 |
| HC17 | 5.75 | 5.75 | 4.29 | U-4HA | 4.29 | 23.94 | 50.28 | UV2 | 5.14 | 0.10 | 0.36 | 0.12 |
| HC18 | - | 13.16 | 1.77 | A200 | 1.77 | 27.44 | 54.68 | UV1 | 0.53 | 0.11 | 0.41 | 0.14 |
| HC19 | - | 13.16 | 1.77 | A400 | 1.77 | 27.44 | 54.68 | UV1 | 0.53 | 0.11 | 0.41 | 0.14 |
| HC20 | - | 13.16 | 1.77 | 4G | 1.77 | 27.44 | 54.68 | UV1 | 0.53 | 0.11 | 0.41 | 0.14 |
| HC21 | - | 13.40 | 1.80 | - | - | 27.93 | 55.66 | UV1 | 0.54 | 0.11 | 0.42 | 0.14 |
| HC22 | - | 13.40 | 1.80 | - | - | 27.93 | 55.66 | UV1 | 0.54 | 0.11 | 0.42 | 0.14 |
| HC23 | 6.66 | 6.66 | 1.79 | - | - | 27.78 | 55.90 | UV1 | 0.54 | 0.11 | 0.42 | 0.14 |
| HC24 | - | 13.16 | 1.77 | GMA | 1.77 | 27.44 | 54.68 | UV1 | 0.53 | 0.11 | 0.41 | 0.14 |

### [Table 2]

**Table 2**

| | Production conditions | | | | Evaluation of characteristics | | | | | | | | |
|---|---|---|---|---|---|---|---|---|---|---|---|---|---|
| | Composition | Substrate | UV irradiatio n time(sec) | Annealing condition s | Adhesion | Abrasion resistance 1kg/3kg/5k g | Boiling adhesion (hr) | | Weather-resistant adhesion (hr) | | | | |
| | | | | | | | 1 | 5 | 24 | 48 | 72 | 96 | 120 |
| Example 1 | HC1 | MR8 | 40 | 120°C*1h | 100 | A' /B/B | 100 | 100 | 100 | 100 | 100 | 100 | 20 |
| Example 2 | HC2 | MR8 | 40 | 120°C*1h | 100 | A' /B/B | 100 | 100 | 100 | 100 | 100 | 100 | 50 |
| Example 3 | HC3 | MR8 | 40 | 120°C*1h | 100 | A'/B/B' | 100 | 100 | 100 | 100 | 93 | 70 | - |
| Example 4 | HC4 | MR8 | 40 | 120°C*1h | 100 | A' /B/B | 98 | 95 | 100 | 100 | 100 | 65 | - |
| Example 5 | HC5 | MR8 | 40 | 120°C*1h | 100 | B/B/B' | 100 | 100 | 100 | 100 | 100 | 100 | 100 |
| Example 6 | HC6 | MR8 | 40 | 120°C*1h | 100 | B/B'/B' | 100 | 100 | 100 | 100 | 100 | 100 | 100 |
| Example 7 | HC7 | MR8 | 40 | 120°C*1h | 100 | B/B'/C | 100 | 100 | 100 | 100 | 100 | 100 | 100 |
| Example 8 | HC8 | MR8 | 40 | 120°C*1h | 100 | B/B'/C | 100 | 100 | 100 | 100 | 100 | 95 | 95 |
| Example 9 | HC9 | MR8 | 40 | 120°C*1h | 100 | A'/B/C | 100 | 100 | 100 | 100 | 100 | 90 | 20 |
| Example 10 | HC10 | MR8 | 40 | 120°C*1h | 100 | A'/B/B' | 100 | 100 | 100 | 100 | 100 | 100 | 40 |
| Example 11 | HC11 | MR8 | 40 | 120°C*1h | 100 | A'/A'/B | 100 | 100 | 100 | 90 | 85 | 30 | - |
| Example 12 | HC12 | MR8 | 40 | 120°C*1h | 60 | B/B'/B' | 30 | - | 60 | 20 | - | - | - |
| Example 13 | HC13 | MR8 | 40 | 120°C*1h | 100 | B/B'/B' | 50 | - | 100 | 50 | - | - | - |
| Example 14 | HC14 | MR8 | 40 | 120°C*1h | 100 | B/C/C | 100 | 100 | 100 | 97 | 30 | - | - |
| Example 15 | HC15 | MR8 | 40 | 120°C*1h | 100 | B/B'/B' | 90 | 90 | 100 | 40 | - | - | - |
| Example 16 | HC16 | MR8 | 40 | 120°C*1h | 100 | C'/C'/D | 100 | 100 | 100 | 100 | 100 | 90 | 30 |
| Example 17 | HC17 | MR8 | 40 | 120°C*1h | 100 | C'/D/D | 100 | 100 | 90 | 90 | 90 | 90 | 60 |
| Example 18 | HC18 | MR8 | 40 | 120°C*1h | 100 | B'/C/C | 95 | 95 | 100 | 100 | 95 | 95 | 95 |
| Example 19 | HC19 | MR8 | 40 | 120°C*1h | 100 | B/B'/C | 90 | 90 | 100 | 100 | 97 | 40 | - |
| Example 20 | HC20 | MR8 | 40 | 120°C*1h | 100 | B'/C/C' | 93 | 93 | 100 | 100 | 100 | 100 | 90 |
| Example 21 | HC21 | MR8 | 40 | 110°C*1h | 100 | B'/B'/C | 100 | 100 | 100 | 100 | 100 | 95 | 40 |
| Example 22 | HC22 | MR8 | 80 | 110°C*1h | 100 | A'/B/B' | 100 | 100 | 100 | 100 | 100 | 100 | 93 |
| Example 23 | HC22 | CR39 | 80 | 110°C*1h | 100 | A' /B/B | 100 | 100 | 100 | 100 | 100 | 100 | 100 |
| Example 24 | HC23 | MR8 | 80 | 110°C*1h | 100 | A'/A'/B' | 100 | 100 | 100 | 100 | 100 | 100 | 20 |
| Example 25 | HC23 | CR39 | 80 | 110°C*1h | 100 | A'/A'/B | 100 | 100 | 100 | 100 | 100 | 100 | 100 |
| Example 26 | HC24 | MR8 | 80 | 110°C*1h | 100 | A'/B/C | 100 | 98 | 100 | 100 | 100 | 100 | 90 |
| Example 27 | HC24 | CR39 | 80 | 110°C*1h | 100 | B'/B'/C | 100 | 100 | 100 | 100 | 100 | 100 | 100 |

As is clear from Tables 1 and 2, the optical laminates according to Examples 1 to 10, Example 16, and Examples 18 to 27 in which the photocurable compositions HC1 to HC10, HC16, and HC18 to HC24 including the ultraviolet absorber including a radical-polymerizable group were used exhibited excellent weather-resistant adhesion even after 48 hours. Contrary to this, the optical laminates according to Examples 11 to 15 and Example 17 using the photocurable compositions HC11 to HC15 and HC17, respectively, which do not include an ultraviolet absorber including a radical-polymerizable group showed a decrease in weather-resistant adhesion after 48 hours.

## Claims

1. A photocurable composition comprising an inorganic oxide, a radical-polymerizable monomer, an ultraviolet absorber comprising a radical-polymerizable group, and a photopolymerization initiator.

2. The photocurable composition according to claim 1, wherein a proportion of the ultraviolet absorber comprising a radical-polymerizable group in a solid component is 0.1% by mass or more and 15% by mass or less.

3. The photocurable composition according to claim 1 or 2, wherein the inorganic oxide comprises zirconia.

4. The photocurable composition according to claim 1 or 2, wherein the inorganic oxide comprises a radical-polymerizable group.

5. The photocurable composition according to claim 1 or 2, wherein a proportion of the inorganic oxide in a solid component is 20% by mass or more and 60% by mass or less.

6. The photocurable composition according to claim 1 or 2, wherein the ultraviolet absorber has a maximum absorption peak wavelength in a range of 320 nm or more and 360 nm or less.

7. The photocurable composition according to claim 1 or 2, wherein the radical-polymerizable monomer comprises a trifunctional acrylic monomer having three (meth)acryloyl groups in a molecule.

8. The photocurable composition according to claim 7, wherein a proportion of the trifunctional acrylic monomer in the radical-polymerizable monomer is 20% by mass or more and 80% by mass or less.

9. The photocurable composition according to claim 1 or 2, wherein the radical-polymerizable monomer comprises a tetrafunctional acrylic monomer having four (meth)acryloyl groups in a molecule.

10. The photocurable composition according to claim 9, wherein a proportion of the tetrafunctional acrylic monomer in the radical-polymerizable monomer is 20% by mass or more and 80% by mass or less.

11. The photocurable composition according to claim 1 or 2, wherein the radical-polymerizable monomer further comprises a compound having an isocyanate group.

12. An optical laminate, comprising an optical substrate, and
a hard coat layer comprising a cured product of the photocurable composition according to claim 1 or 2, the hard coat layer facing at least one main surface of the optical substrate.

13. An optical article comprising the optical laminate according to claim 12.

14. A lens comprising the optical laminate according to claim 12, wherein the optical substrate is a plastic lens substrate.

15. The lens according to claim 14, wherein the plastic lens substrate is a convex meniscus lens or a concave meniscus lens and the hard coat layer is provided at least on a concave surface side.

16. Eyeglasses comprising the lens according to claim 14 or 15.
